# FASCICULE DE BREVET EUROPEEN

(11) **EP 0 516 497 B1**
(45) Date de publication et mention de la délivrance du brevet: **06.07.1994**
(21) Numéro de dépôt: 92401229.7
(22) Date de dépôt: 30.04.1992
(51) Int. Cl.: F16D 65/16, F16D 65/56, F16D 55/226

(54) **Sous ensemble de moteur de frein à disque équipé d'un actionnement mécanique**
Scheibenbremsmotorbaugruppe mit mechanischer Betätigung
Disc brake motor sub-assembly with a mechanical actuator

(30) Priorité: 28.05.1991 FR 9106376
(43) Date de publication de la demande: 02.12.1992
(73) Titulaire: ALLIEDSIGNAL EUROPE SERVICES TECHNIQUES, 93700 Drancy (FR)
(72) Inventeur: Mery, Jean-Claude, Bendix Europe Services Techn., F-93700 Drancy (FR)
(74) Mandataire: Bentz, Jean-Paul

(56) Documents cités:
- EP-A- 0 209 271
- DE-A- 3 222 741
- DE-C- 863 009
- US-A- 4 715 479

## Description

La présente invention concerne un sous-ensemble de moteur de frein, plus particulièrement pour frein à disque, du type comprenant un piston de commande, en appui sur une vis se prolongeant du côté opposé au piston de commande par un premier plateau immobilisé en rotation par rapport au corps du sous-ensemble et pouvant être poussé vers le piston de commande par un deuxième plateau actionné en rotation de l'extérieur, par l'intermédiaire de billes logées entre les deux plateaux et roulant dans des empreintes de ces plateaux, ces empreintes comportant des pentes pour transformer la rotation relative des deux plateaux en une translation relative, et offrant aux billes une trajectoire centripète.

La nécessité d'une course réduite du câble actionnant par l'intermédiaire d'un levier, le deuxième plateau en rotation, tout en fournissant au piston de commande l'effort nécessaire pour un freinage de secours du véhicule, a conduit à rechercher des moyens de variation du rapport entre l'angle de rotation du deuxième plateau, et la course d'avancement du piston de commande. En effet ce rapport doit augmenter au cours de la rotation, cela étant justifié par le fait que le début de la rotation du deuxième plateau sert surtout à combler les jeux, sans effort résistant appréciable, ce dernier augmentant par contre fortement vers la fin de la rotation.

Il est connu, notamment par le brevet DE 863 009, de prévoir des empreintes qui offrent aux billes une trajectoire centripète se développant suivant une ligne droite.

La présente invention repose sur la mise en évidence du fait qu'une telle réalisation correspond à un encombrement nuisible pour la conception de moteurs de frein à haut rendement, et a pour but de réduire cet encombrement en vue d'une optimisation de ce rendement.

A cette fin, le sous-ensemble de moteur de frein conforme à l'invention est essentiellement caractérisé en ce que les pentes des empreintes présentent dans le plan des plateaux une courbure non nulle et une concavité tournée vers l'intérieur des plateaux.

Ces empreintes forment de préférence un arc de cercle, mais peuvent éventuellement décrire une spirale.

D'autres caractéristiques et avantages de la présente invention ressortiront de la description suivante d'un mode de réalisation, donnée à titre illustratif, faite en relation avec les dessins annexés sur lesquels :
- La Figure 1 est une vue schématique en demi-coupe d'un frein à disque de type connu, comportant un dispositif d'actionnement mécanique composé de deux plateaux entre lesquels sont logées une ou plusieurs billes.
- La Figure 2 est une vue en coupe circonférentielle du logement d'une bille dans les deux plateaux, montrant la pente de transformation du mouvement, citée plus haut.
- La Figure 3 est une vue de face suivant la flèche A sur la Figure 1, des empreintes suivant l'invention, et
- La Figure 4 montre de manière superposée, les deux plateaux avec des empreintes suivant l'invention, entre lesquels se trouve une bille, l'empreinte du deuxième plateau étant représentée en positions de début et de fin de rotation.

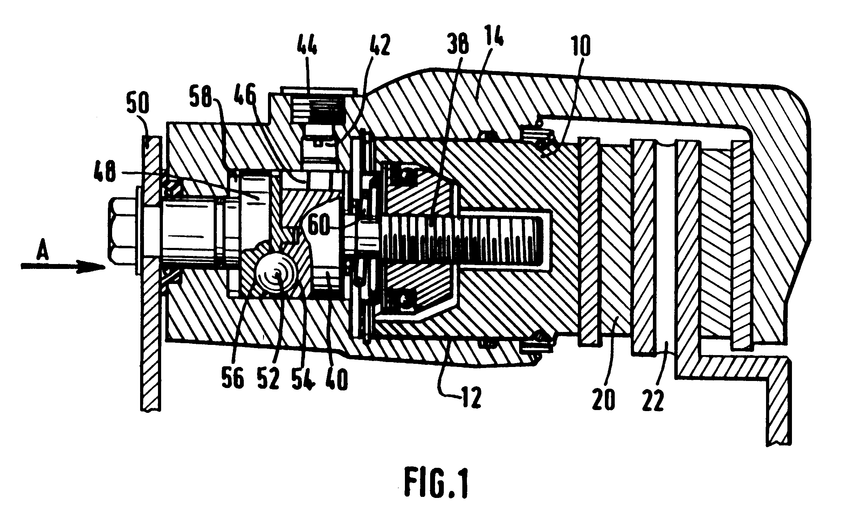

On reconnaît sur la Figure 1 un sous-ensemble de moteur de frein du type sus-mentionné et comprenant un piston de commande 10, logé dans un alésage étagé 12 et destiné à pousser un élément de friction 20 afin d'amener ce dernier en contact de friction avec un organe rotatif à freiner, par exemple un disque 22.

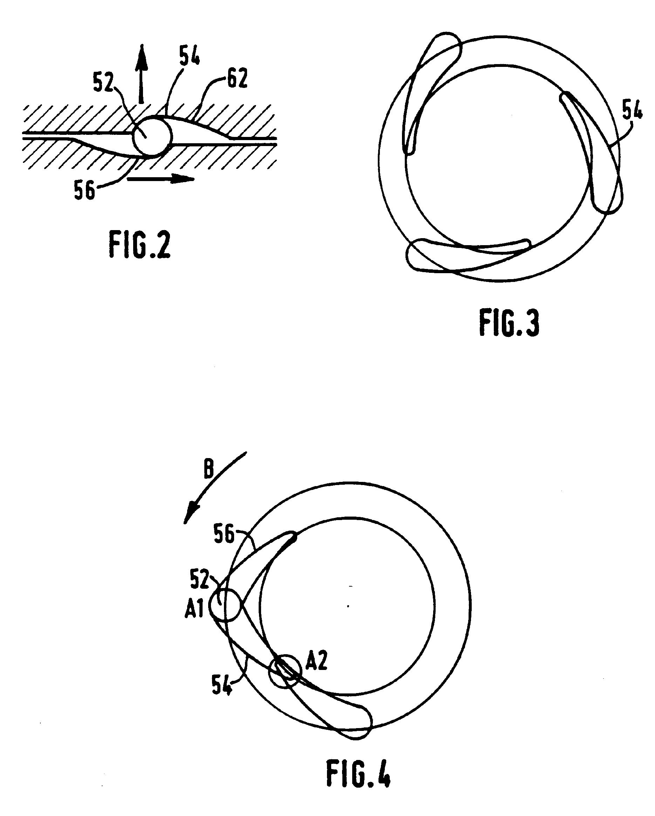

Le piston de commande 10 coopère avec une broche filetée 38 couplée à un dispositif d'actionnement mécanique composé d'un prolongement 40 de la vis 38, en forme de plateau, immobilisé en rotation par rapport au corps 14 du sous-ensemble de frein par un pion 42 maintenu en place par un bouchon 44 et pénétrant dans une rainure 46 du plateau 40, et d'un deuxième plateau 48 pouvant être actionné en rotation par un levier extérieur 50, les deux plateaux étant écartés l'un de l'autre par au moins une bille 52 roulant dans au moins une empreinte 54, 56 de chaque plateau, détaillée Figure 2.

Ces empreintes comportent une pente 62, sur laquelle roulent les billes 52.

Le deuxième plateau est mis en appui sur une butée à aiguilles 58 roulant sur le fond de l'alésage 12 par un ressort 60 par l'intermédiaire du premier plateau 40 et des billes 52.

Le dispositif d'actionnement mécanique agit comme suit :

La rotation du levier 50, transmise au deuxième plateau 48 fait rouler les billes 52 dans les empreintes 54, 56 des premier et deuxième plateaux. Les billes roulant sur les pentes 62 écartent les plateaux l'un de l'autre, avec un rapport entre l'angle dont tourne le deuxième plateau, et la distance dont se déplace axialement le premier plateau, qui est une fonction directe de l'angle de ces pentes par rapport au plan des plateaux. plus cet angle est important, plus le déplacement axial du premier plateau est grand.

Dans le but de maintenir au minimum l'angle de rotation total du deuxième plateau 48, donc l'angle de rotation du levier 50 et le déplacement de son câble de commande, tout en conservant l'effort d'écartement du premier plateau pour obtenir un freinage efficace, il est connu de placer les billes au départ sur un grand diamètre pour un déplacement important et un effort résistant faible du premier plateau, et en finale à placer ces billes sur un diamètre plus faible pour une augmentation de l'effort résultant .

Ainsi les empreintes 54, 56 ne sont pas orientées selon une circonférence, mais sont déviées de cette circonférence de façon centripète.

Cependant, pour augmenter encore l'efficacité du serrage, l'invention propose, comme illustré sur la Figure 3, de donner aux empreintes une forme courbe dont la concavité est tournée vers l'intérieur du plateau.

En effet, cette disposition présente le double avantage de diminuer les forces de frottement et de pouvoir réduire encore la surface des plateaux tournants dans la mesure où la zone libre au centre des plateaux, qui doit présenter une surface minimale non nulle pour permettre le centrage de ces derniers, est sensiblement plus grande, pour un diamètre donné des plateaux, dans une réalisation conforme à l'invention que dans une réalisation conforme à l'art antérieur.

La Figure 4 montre les deux premier et deuxième plateaux, comportant les empreintes suivant l'invention, et le déplacement d'une bille au cours de la rotation du deuxième plateau dans le sens de la flèche B c'est-à-dire le sens d'actionnement du levier 50 pour l'action de freinage, entre son point de départ A1 sur la circonférence la plus grande, et son point d'arrivée A2 sur la circonférence la plus petite, la bille restant toujours au croisement des deux empreintes.

Pour un couple constant appliqué au cours de la rotation du deuxième plateau, l'effort appliqué aux billes, c'est-à-dire au premier plateau dans le sens axial, augmente au cours de la rotation puisque le rayon du point où s'applique cet effort diminue, le chemin parcouru par le premier plateau diminuant lui-même en même temps.

Cette disposition conduit donc à un dispositif d'actionnement mécanique dans lequel le mouvement de rotation (du levier 50) est transformé en déplacement axial, (du premier plateau 40) avec un rapport variable, ce dispositif ayant une efficacité améliorée pour ce qui concerne l'augmentation du rapport entre l'effort de sortie et l'effort d'entrée et la diminution de la course correspondante de l'organe d'actionnement.

## Revendications

1. Sous-ensemble de moteur de frein à disque comprenant au moins un piston (10) pouvant être commandé par un sous-ensemble mécanique comportant des premier et deuxième plateaux (40, 48) dont l'un est actionné en rotation et l'autre immobile, ces deux plateaux portant des empreintes (54, 56) en vis à vis dans lesquelles est logée au moins une bille (52), les dites empreintes étant pourvues, dans le sens axial des plateaux, d'une pente (62) permettant de transformer la rotation du premier plateau (40) en déplacement axial du deuxième plateau (48) pour commander le piston (10), et offrant à la bille une trajectoire centripète, caractérisé en ce que les pentes (62) des empreintes (54,56) présentent, dans le plan des plateaux, une courbure non nulle et une concavité tournée vers l'intérieur de ces plateaux (40,48).

2. Sous-ensemble selon la revendication 1, caractérisé en ce que les empreintes (54, 56) forment un arc de cercle dans le plan des plateaux (40, 48).

3. Sous-ensemble selon la revendication 1, caractérisé en ce que les empreintes (54, 56) suivent une spirale dans le plan des plateaux (40, 48).

## Patentansprüche

1. Scheibenbremsmotorbaugruppe mit wenigstens einem Kolben (10), der von einer mechanischen Unterbaugruppe gesteuert werden kann, die eine erste Platte (40) und eine zweite Platte (48) enthält, von denen eine durch eine Drehung betätigt und die andere feststehend ist, wobei diese beiden Platten einander gegenüberliegende Vertiefungen (54, 56) enthalten, in denen wenigstens eine Kugel (52) angeordnet ist, wobei die Vertiefungen in der axialen Richtung der Platten mit einer Schräge (62) versehen sind, die eine Wandlung der Drehung der ersten Platte (40) in eine axiale Verstellung der zweiten Platte (48) ermöglicht, um den Kolben (10) zu steuern, und die der Kugel eine dem Mittelpunkt zustrebende Bewegungsbahn bieten, dadurch gekennzeichnet, daß die Schrägen (62) der Vertiefungen (54, 56) in der Ebene der Platten eine von Null verschiedene Krümmung und eine zum Inneren der Platten (40, 48) gerichtete Konkavität besitzen.

2. Unterbaugruppe nach Anspruch 1, dadurch gekennzeichnet, daß die Vertiefungen (54, 56) in der Ebene der Platten (40, 48) einen Kreisbogen bilden.

3. Unterbaugruppe nach Anspruch 1, dadurch gekennzeichnet, daß die Vertiefungen (54, 56) in der Ebene der Platten (40, 48) einer Spirale folgen.

## Claims

1. Disk-brake motor subassembly comprising at least one piston (10), which can be controlled by a mechanical subassembly having first and second plates (40, 48), one of which is actuated in rotation and the other is fixed, these two plates bearing mutually facing indentations (54, 56) in which is accommodated at least one ball (52), said indentations being provided, in the axial direction of the plates with a slope (62) which allows the conversion of the rotation of the first plate (40) into axial displacement of the second plate (48) in order to control the piston (10), and providing the ball with a centripetal trajectory, characterized in that the slopes (62) of the identations (54, 56) have in the plane of the plates, a non-zero curvature and a concavity turned towards the inside of the these plates (40, 48).

2. Subassembly according to Claim 1, characterized in that the identations (54, 56) form an arc of a circle in the plane of the plates (40, 48).

3. Subassembly according to Claim 1, characterized in that the indentations (54, 56) follow a spiral in the plane of the plates (40, 48).
